# EUROPÄISCHE PATENTSCHRIFT

(11) **EP 3 372 445 B1**
(45) Veröffentlichungstag und Bekanntmachung des Hinweises auf die Patenterteilung: **19.01.2022**
(21) Anmeldenummer: 18158746.0
(22) Anmeldetag: 27.02.2018
(51) Int. Cl.: B60N 2/815, B60N 2/824, B60N 2/844, B60N 2/85, B60N 2/865

(54) **VERSTELLVORRICHTUNG FÜR EINE KOPFSTÜTZE EINES FAHRZEUGSITZES UND FAHRZEUGSITZ MIT DER VERSTELLVORRICHTUNG**
ADJUSTING DEVICE FOR A HEADREST OF A VEHICLE SEAT, AND VEHICLE SEAT COMPRISING THE ADJUSTING DEVICE
DISPOSITIF DE RÉGLAGE POUR UN APPUI-TÊTE DE SIÈGE DE VÉHICULE ET SIÈGE DE VÉHICULE POURVU DE DISPOSITIF DE RÉGLAGE

(30) Priorität: 07.03.2017 DE 102017104761
(43) Veröffentlichungstag der Anmeldung: 12.09.2018
(73) Patentinhaber: Faurecia Autositze GmbH, 31655 Stadthagen (DE)
(72) Erfinder: Jarrin, Clément, 85737 Ismaning (DE); Bulle, Hervé, 70400 Hericourt (FR); Kowalski, Tomasz, 58-306 Walbrzych (PL); Hagemann, Rainer, 31683 Obernkirchen (DE)
(74) Vertreter: Bremer, Ulrich

(56) Entgegenhaltungen:
- DE-A1-102009 038 631
- US-A1- 2014 001 811
- US-A1- 2014 182 404
- US-A1- 2016 325 652

## Beschreibung

Die Erfindung betrifft eine Verstellvorrichtung für eine Kopfstütze eines Fahrzeugsitzes und einen derartigen Fahrzeugsitz.

Derartige Verstellvorrichtungen ermöglichen eine Verstellung der Kopfstütze gegenüber der Rückenlehne und somit eine Anpassung der Kopfstütze an den Sitzinsassen.

Hierbei ermöglichen die Verstellvorrichtungen im Allgemeinen eine Höhenverstellung der Kopfstütze gegenüber der Rückenlehne, d. h. eine Verstellung in vertikaler Richtung bzw. Z-Richtung. Weiterhin sind auch Verstellvorrichtungen zur Anpassung der Längsposition bzw. X-Position bekannt, bei denen somit die Kopfstütze relativ zur Rückenlehne nach vorne verstellt werden kann.

Der Sitzinsasse kann somit die beiden Verstellungen jeweils anpassen, z. B. durch Entriegeln jeweils einer Verriegelungseinrichtung und Einstellung der beiden Richtungen.

Derartige Verstellungen sind jedoch im Allgemeinen recht aufwändig und schwer zu bedienen. So sind im Allgemeinen zwei Handhaben bzw. Betätigungseinrichtungen sukzessive zu bedienen, um z. B. zunächst die Z-Position und nachfolgend die X-Position einzustellen. Hierbei sind zum Teil Getriebesysteme bekannt, die zum einen aufwändig ausgebildet sind und zum anderen schwer zu bedienen sind.

Weiterhin sind derartige Verstellvorrichtungen im Allgemeinen auch aufwändig ausgebildet und benötigen einen erheblichen Platzbedarf, wobei sie weiterhin aufgrund einer hohen Teileanzahl kostspielig sind. Weiterhin ist der ästhetische Eindruck oftmals sehr funktionell bzw. durch die technischen Ausbildungen bedingt und erfüllt daher nicht höhere Designanforderungen.

Die ES 1064266 U zeigt einen Fahrzeugsitz mit einer höhenverstellbaren Kopfstütze, bei der ein fester Träger an Kopfstützenstangen angebracht ist, an dem ein längerer oberer und ein kürzerer unterer Lenker angelenkt sind, die mit ihren anderen Enden an einem verstellbaren Träger einer Kopfstütze angelenkt sind und hierdurch eine Höhenverstellung des verstellbaren Trägers ermöglichen. Eine Arretierung ist zwischen dem oberen Lenker und dem verstellbaren Träger vorgesehen.

Die US 2016/0325652 A1 zeigt eine Kopfstützen-Verstellung an einem Fahrzeugsitz, bei der ein fester Rahmen und ein verstellbarer Rahmen vorgesehen ist, die durch einen Scheren-artigen Mechanismus miteinander gekoppelt sind. Hierbei ist ein Verriegelungsmechanismus zur Verriegelung und Entriegelung vorgesehen.

Die DE 10 2009 038 631 A1 zeigt eine Kopfstütze für einen Fahrzeugsitz, die eine Längsverstellung durch einen Schienen-Zahnrad-Mechanismus zeigt.

Der Erfindung liegt die Aufgabe zugrunde, eine Verstellvorrichtung für eine Kopfstütze und einen Fahrzeugsitz mit einer derartigen Verstellvorrichtung zu schaffen, die eine sichere Verstellung bei einfacher Bedienbarkeit ermöglichen.

Diese Aufgabe wird durch eine Verstellvorrichtung nach Anspruch 1 und einen Fahrzeugsitz mit einer derartigen Verstellvorrichtung gelöst. Die Unteransprüche beschreiben bevorzugte Weiterbildungen.

Somit ist eine Führungseinrichtung vorgesehen, die einen Kopfstützenträger vertikal verstellbar aufnimmt, wodurch die Z-Verstellung ermöglicht wird. Die X-Verstellung oder Längsverstellung verstellt die Führungseinrichtung gegenüber einer Lehnenanbindung.

Weiterhin ist eine Verriegelungseinrichtung vorgesehen, die beide Verstellungen - die X-Verstellung und die Z-Verstellung - verriegelt. Die Entriegelung erfolgt über eine gemeinsame Handhabe, die der Benutzer betätigen kann, z. B. indem er diese nach vorne zieht.

Somit wird der Vorteil einer einheitlichen Entriegelungsbetätigung der Handhabe ermöglicht; der Sitzinsasse betätigt die Handhabe und entriegelt hierdurch beide Verriegelungen, so dass er nachfolgend sowohl die X-Position als auch die Z-Position einstellen kann.

Die Längsverstellung ist vorzugsweise mit zwei Lenkern ausgebildet, die jeweils mit einem unteren Gelenk in der Lehnenanbindung und einem oberen Gelenk an der Führungseinrichtung direkt oder indirekt angelenkt sind.

Bei Betätigung der einen gemeinsamen Handhabe sind vorteilhafterweise sowohl die X-Richtung als auch die Z-Richtung freigegeben, so dass der Benutzer das Kopfkissen in beiden Dimensionen - X- und Z-Richtung - verstellen kann und hierdurch direkt eine angenehmere Position einstellen kann, ohne die beiden Verstellungen sukzessive durchführen zu müssen. Somit kann der Benutzer das Kopfkissen ergreifen und in einer einzigen Bewegung z. B. nach unten und vorne ziehen. Durch Loslassen der Handhabe kann wiederum eine Verriegelung in der gewünschten Position erfolgen.

Somit ist eine einfache und intuitiv leicht zu merkende Bedienung möglich, bei einfacher Verstellung des Kopfkissens, ohne zusätzliche Elemente oder Einrichtungen betätigen oder verstellen zu müssen.

Die Verriegelungseinrichtung weist vorteilhafterweise ein oder mehrere Verriegelungselemente auf, mit einem Längseingriff, der in der geeigneten Längsposition eingreift, und weiterhin einem Höheneingriff, der die vertikale Position festlegt. Die beiden Eingriffe werden in der Entriegelungsstellung außer Eingriff gebracht, so dass die freie Verstellbarkeit möglich ist. Hierdurch wird der Vorteil einer einfachen Ausbildung und die Ermöglichung einer freien Verstellung, d.h. auch ohne Getriebe etc. ermöglicht.

Somit können gemäß einer bevorzugten Ausbildung bei Betätigung der einen gemeinsamen Handhabe die Verstellungen in X- und Z-Richtung simultan oder gleichzeitig entriegelt werden.

Gemäß einer besonders bevorzugten Ausbildung sind der Längseingriff und Höheneingriff an demselben Verriegelungselement ausgebildet, sodass eine gemeinsames Verriegelungselement für beide Entriegelungen verstellt, vorzugsweise geschwenkt, wird.

Der Längseingriff und Höheneingriff können räumlich getrennt ausgebildet sein, z. B. an einem oberen Bereich und unteren Bereich des Verriegelungselementes. Somit kann eine Schwenkbewegung des Verriegelungselementes eingestellt werden, die die beiden Eingriffe unterschiedlich verstellt, z. B. den Längseingriff in vertikaler Richtung und den Höheneingriff in Längsrichtung.

Das Verriegelungselement kann insbesondere an der Führungseinrichtung schwenkbar gelagert sein, so dass es eine Verriegelung der Längsverstellung und des Kopfstützenträger gegenüber der Führungseinrichtung ermöglicht; hierdurch wird eine hohe Stabilität erreicht.

Der Längseingriff greift in die Längsverstellung, vorteilhafterweise in einen der Lenker ein, wodurch eine sichere mechanische Sperrung des Vier-Gelenk-Systems ermöglicht wird. Hierbei kann der Längseingriff des Verriegelungselementes z. b. von unten nach oben erfolgen, wodurch eine sichere Verriegelung in Längsrichtung ermöglicht wird, somit wird das Verriegelungselement zur Freigabe des Längseingriffs vorzugsweise nach unten weggeschwenkt wird.

Der Höheneingriff kann insbesondere durch einen Freiraum der Führungseinrichtung nach vorne erfolgen, so dass direkt der Kopfstützenträger gesperrt werden kann.

Somit kann eine einfach bauende Verriegelungseinrichtung ausgebildet werden, die sowohl einen Längseingriff als auch Vertikaleingriff bzw. Höheneingriff ermöglicht und durch eine einzige Entriegelungsbewegung beide Verriegelungen freigibt.

Die Handhabe kann z. B. ein Griff oder ähnliches aufweisen, das seitlich an der Verstellvorrichtung hervorragt und somit vom Benutzer seitlich neben seinem Kopf, erfasst werden kann, und z. B. zur Entriegelung nach vorne gezogen wird. Hierdurch wird z. B. das Verriegelungselement derartig geschwenkt, dass es den Längseingriff und Höheneingriff freigibt, so dass der Benutzer nachfolgend die Kopfstütze z. B. mit seiner anderen Hand in X- und Z-Richtung geeignet positionieren kann, woraufhin er die Handhabe freigeben kann.

Die Verriegelungen sind vorteilhafterweise diskret bzw. in diskreten Positionen, wodurch eine hohe Steifigkeit bzw. ein festerer Eingriff ermöglicht wird. Hierzu kann der Längseingriff einen vorstehenden Zahn aufweisen, der in geeignete Gegeneingriffe, z. B. Vertiefungen der Längsverstellung, insbesondere in Vertiefungen eines der Lenker eingreift. Der Höheneingriff kann z. B. in unterschiedliche Fenster des Kopfstützenträgers eingreifen

Bei der bevorzugten Längsverstellung mit Lenkern bilden die Lenker vorteilhafterweise ein Vier-Gelenk-System bzw. Vier-Gelenk-Getriebe aus. Hierbei sind die Lenker vorzugsweise mit ihren unteren Gelenken in einer Lehnenanbindung und in ihren oberen Gelenken an der Führungseinrichtung angelenkt bilden vorzugsweise ein Vier-Gelenk-System mit lediglich einem Freiheitsgrad aus. Hierdurch wird eine klapperfreie und sichere Verstellung bzw. Zwangsführung der Führungseinrichtung gegenüber der Lehnenanbindung ermöglicht. Eine derartige Ausbildung mit vorderem und hinterem Lenker, die jeweils z. B. mit hinreichender Breite und Verstrebung ausgebildet sein können, erreicht weiterhin auch eine hohe Crashsicherheit und Festigkeit.

Hierbei bilden die beiden Lenker gemäß einer Ausführungsform kein Parallelführungsgestänge bzw. Parallelogramm aus, sondern sind z. B. ungleich lang ausgebildet. Hierbei wird erkannt, dass durch derartig ungleich ausgebildete Lenker zum einen eine höhere Steifigkeit oder Festigkeit erreichbar ist, und dennoch die Verstellung nicht als unangenehme wahrgenommen wird; so kann das Vier-Gelenk-System z. B. die Führungseinrichtung bei der Schwenkbewegung nach vorne und weiterhin etwas nach unten schwenken; da der Benutzer ohnehin die Kopfstütze in vertikaler Richtung verstellt, wird er diese leichte Schwenkbewegung nach unten nicht relevant bemerken. Ein derartiges Vier-Gelenk-System mit höherer Steifigkeit als z. B. Parallelführungsgestänge ausgebildet werden. Eine hohe Steifigkeit wird hierbei auch erreicht, indem der hintere Lenker länger ist.

Alternativ hierzu ist auch die Ausbildung der Längsverstellung mit Lenkern möglich, die eine Parallelogramm-Verstellung bzw. Parallelführungs-Gestänge ausbilden.

Das hintere untere Gelenk kann insbesondere unterhalb des vorderen unteren Gelenks des vorderen Lenkers ausgebildet sein, weiterhin kann insbesondere das hintere obere Gelenk des hinteren Lenkers oberhalb des vorderen oberen Gelenks des vorderen Lenkers angeordnet sein, wodurch ein steifer und kompakter Aufbau ermöglicht wird.

Die Verstellvorrichtung kann durch geeignete Federeinrichtungen unterstützt werden. So kann eine Feder zur Vorspannung der Längsverstellung z. B. zwischen der Führungseinrichtung und der Längsverstellung, z. B. einem der Lenker und z. B. eine weitere Feder zur Vorspannung der Vertikalverstellung zwischen z. B. der Führungseinrichtung und dem Kopfstützenträger vorgesehen sein. Die Verriegelungseinrichtung kann vorzugsweise durch eine Feder gegenüber z. B. der Führungseinrichtung vorgespannt sein.

Die Erfindung wird im Folgenden anhand der beiliegenden Zeichnungen an einigen Ausführungsformen erläutert. Es zeigen:
- Fig. 1 a bis 1 d: eine Rücklehne mit einer Kopfstütze und einer Verstellvorrichtung zur Verstellung der Kopfstütze gemäß einer Ausführungsform der Erfindung, mit
a) vorderster und unterster (MaxX/MinZ)-Position der Kopfstütze,
b) vorderster und oberster (MaxX/MaxZ)-Position der Kopfstütze,
c) hinterster und unterster (MinX/MinZ)-Position der Kopfstütze, und
d) hinterster und oberster (MinX/MaxZ)-Position der Kopfstütze;

Fig. 2 perspektivische Darstellungen der Verstellvorrichtung von schräg hinten in:
a) hinterster und mittlerer Höhen-(MinX/MidZ)-Position,
b) vorderster und mittlerer Höhen-(MaxX/MidZ)-Position,
c) hinterster und unterster (MinX/MinZ)-Position
d) hinterster und oberster (MinX/MaxZ)-Position, des Kissenträgers;

Fig. 3 schematische Darstellung der Verstellvorrichtung in den verschiedenen Positionen;
Fig.4 eine perspektivische Rückansicht der Verstellvorrichtung entsprechend Figur 1 in vergrößerter Darstellung;
Fig. 5 eine perspektivische Vorderansicht der Verstellvorrichtung;
Fig. 6 perspektivische Ansichten des Verriegelungselementes;

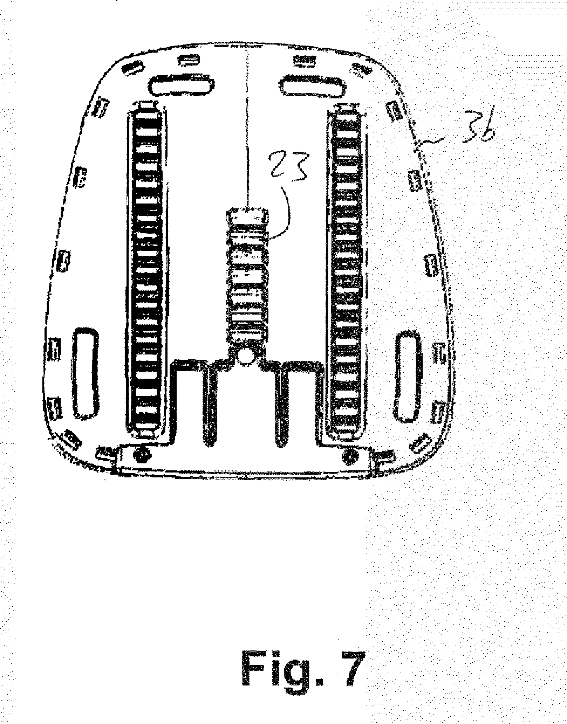

Fig. 7 einen Kopfstützenträger gemäß einer Ausführungsform; und
Fig. 8 eine vergrößerte Darstellung entsprechend Fig. 2b.

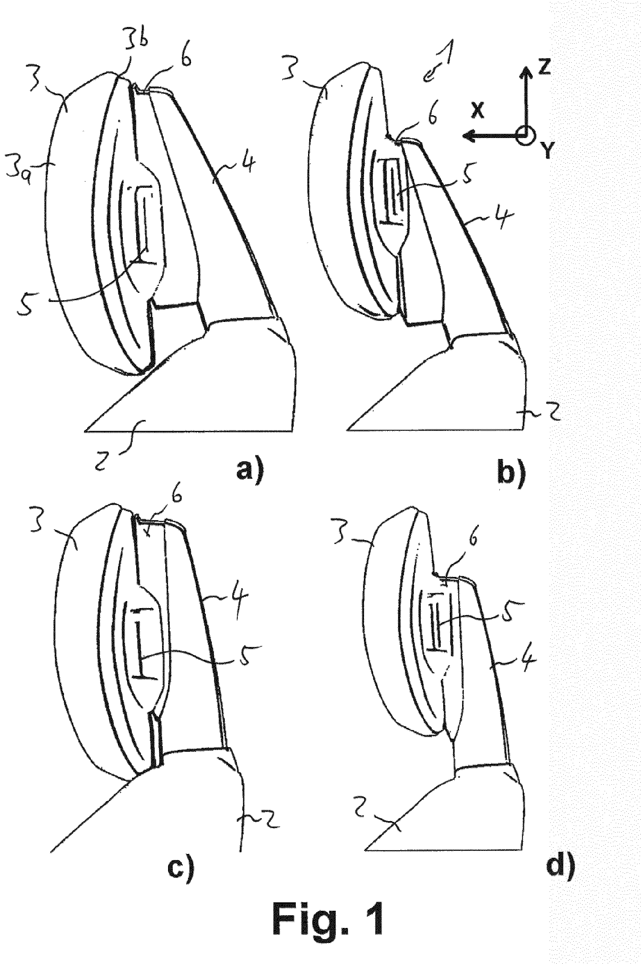

Ein Fahrzeugsitz 1 weist gemäß den verschiedenen Stellungen der Figur 1 jeweils eine Rückenlehne 2 und eine Kopfstütze 3 auf, wobei die Kopfstütze 3 an der Rückenlehne 2 über eine Verstellvorrichtung 4 angebracht ist, die eine Verstellung der Kopfstütze 3 in X-Richtung, d. h. Längsrichtung, und Z-Richtung, d. h. vertikaler Richtung ermöglicht. In Figur 1a) bis 1d) sind hierbei die jeweiligen Endpositionen, d. h. in vorderster und hinterster sowie jeweils oberster und unterster Stellung gezeigt. Zur Verstellung ergreift der Benutzer - hier z. B. mit der linken Hand, ggf. auch stattdessen oder ergänzend mit der rechten Hand, ein Handhabe 5 der Verstellvorrichtung und betätigt diese, so dass nachfolgend die Kopfstütze 3 in den beiden Freiheitsgraden innerhalb der Anschläge verstellbar ist.

Für den Sitzinsassen sind von außen die einzelnen inneren Elemente bzw. der Verstellmechanismus der Verstellvorrichtung 4 nicht optisch zu erkennen, wozu z. B. ein Bezug 6 einteilig oder auch mehrteilig vorgesehen ist, der z. B. nach vorne bündig an ein Kopfstützenkissen 3a der Kopfstütze 3 anschließt und nach hinten und unten vorteilhafterweise an die Rückenlehne 2 anschließen kann, wobei die Handhabe 5 nach außen ragt oder auch vom Bezug 6 mit abgedeckt werden kann. Somit gibt der gesamte Fahrzeugsitz 1 mit der Verstellvorrichtung 4 nach außen einen hochwertigen Design- Eindruck preis, ohne z. B. detaillierte Verstellmechanismen mit verstellbaren mechanischen Teilen offenzulegen, die weiterhin auch die Gefahr z. B. einer Einklemmung oder des Festsetzens von Teilen und Schmutz in einem Mechanismus bringen können.

Weiterhin ist die Verstellvorrichtung 4 trotz der hohen Verstellbarkeit und Funktionalität, die sie gewährleistet, sehr kleinbauend, so dass der Fahrzeugsitz in seinem oberen Bereich mit der Kopfstütze und der Verstellvorrichtung nicht klobig wirkt, sondern schmalbauend und auch hierdurch hohe Design-Anforderungen erfüllt sowie auch eine freie Gestaltung des oberen Lehnenbereichs der Rückenlehne 2 sowie der Kopfstütze 3 zulässt.

Gemäß dieser Ausführungsform ist eine einzige Handhabe 5 zur Verstellbarkeit der Kopfstütze 3 sowohl in Z-Richtung als in X-Richtung vorgesehen, so dass auch eine einfache Bedienbarkeit für den Benutzer gegeben ist, da er lediglich die eine Handhabe 5 zu betätigen hat und nachfolgend die Kopfstütze 3 in den beiden Freiheitsgraden frei einstellen kann. Hierbei ist die Handhabe 5 für den Benutzer auch gut erreichbar, z. B. mit einer Hand direkt neben seinem Kopf, so dass er nicht z. B. Betätigungseinrichtung an der Hinterseite der Kopfstütze 3 oder der Verstellvorrichtung 4 zu betätigen hat.

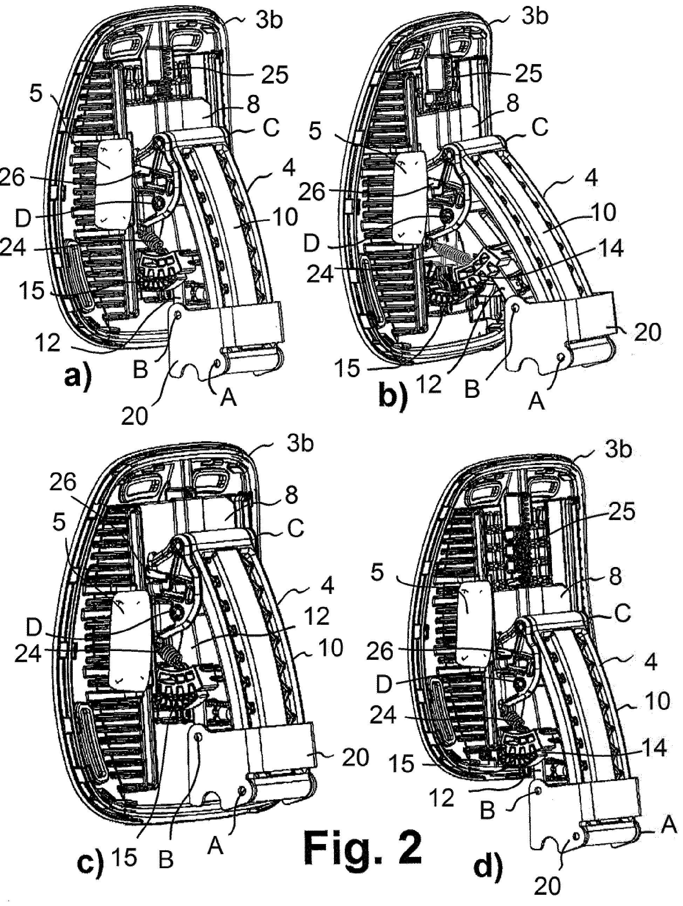

Gemäß der detaillierten Zeichnungen der Figur 2, 4 und 5 weist die Verstellvorrichtung 4 eine Führungseinrichtung 8 auf, an der die Kopfstütze 3 mit ihrem Kopfstützenträger 3b, der das Kopfstützenkissen 3a aufnimmt, höhenverstellbar, d.h. in Z-Richtung verstellbar, aufgenommen ist.

Die Führungseinrichtung 8 ist gegenüber der Rückenlehne 2 über einen Vier-Gelenk-Mechanismus 9, der einen längeren hinteren Lenker 10 und einen kürzeren vorderen Lenker 12 aufweist. Der hintere Lenker 10 ist in einem hinteren unteren Gelenk A an einer Lehnenanbindung 20, und in einem hinteren oberen Gelenk C an der Führungseinrichtung 8 angelenkt. Entsprechend ist der kürzere vordere Lenker 12 in einem vorderen unteren Gelenk B an der Lehnenanbindung 20 und in einem vorderen oberen Gelenk D an der Führungseinrichtung 8 angelenkt. Die Lehnenanbindung 20 wird an der Rückenlehne 2 montiert.

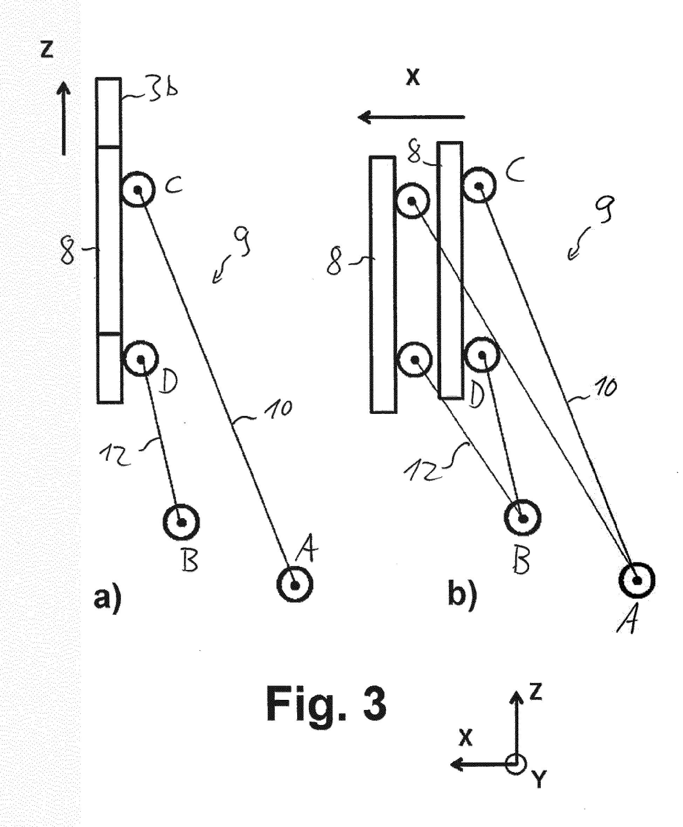

Wie aus der schematischen Zeichnung der Figur 3 ersichtlich ist, wird somit ein Vier-Gelenk-Mechanismus 9 zur Verstellung der Führungseinrichtung 8 gegenüber der Rückenlehne 2 ausgebildet. Vorzugsweise ist dieser Vier-Gelenk-Mechanismus 9 nicht als Parallelogramm-Führung, sondern mit einem längeren hinteren Lenker 10 und einem kürzerem vorderen Lenker 12 ausgebildet, die - wie insbesondere aus Figur 3a, Figur 3b ersichtlich - somit zumindest in den meisten Stellungen auch nicht parallel verlaufen, sondern etwas unterschiedliche Schwenkwege ausführen.

Hierbei ist gemäß der gezeigten Ausführungsform das hintere untere Gelenk A hinter und unterhalb den hinteren vorderen Gelenk B und weiterhin das hintere obere Gelenk C oberhalb des vorderen oberen Gelenkes D vorgesehen, so dass entsprechende hintere Lenker 10 länger als der vordere Lenker 12 ist. Hierbei wird eine schlanke Ausbildung bei großer Längserstreckung bzw. Vertikalerstreckung des Vier-Gelenk-Mechanismus 9, und weiterhin auch eine hohe Stabilität und Steifigkeit erreicht wird, die z. B. bei einer Parallelogramm-Ausbildung, bei der die unteren Gelenke A, B entsprechend den oberen Gelenken C, D vertikal übereinander angeordnet sind, nicht erreichbar is. Somit wird gegenüber einer Parallelogramm-Ausbildung auch ein Klappern besser unterdrückt und eine hohe Steifigkeit erreicht. Die Verstellkinematik in X-Richtung gemäß Figur 3b führt zusätzlich zu der reinen X-Verstellung ggf. zu einer leichten Schwenkbewegung, die beim Vorwärts-Schwenken die Führungseinrichtung 8 auch etwas nach unten schwenkt. Da der Benutzer jedoch nach der Entriegelung die Kopfstütze des Fahrzeugs 8 ohnehin gleichzeitig in X- und Z-Richtung verstellen kann, wird diese Schwenkbewegung nicht als unangenehm empfunden.

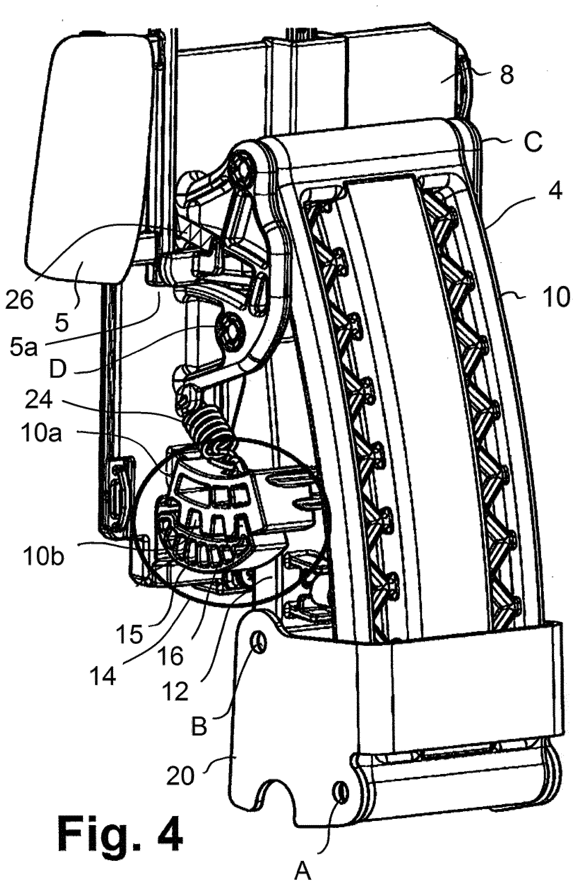

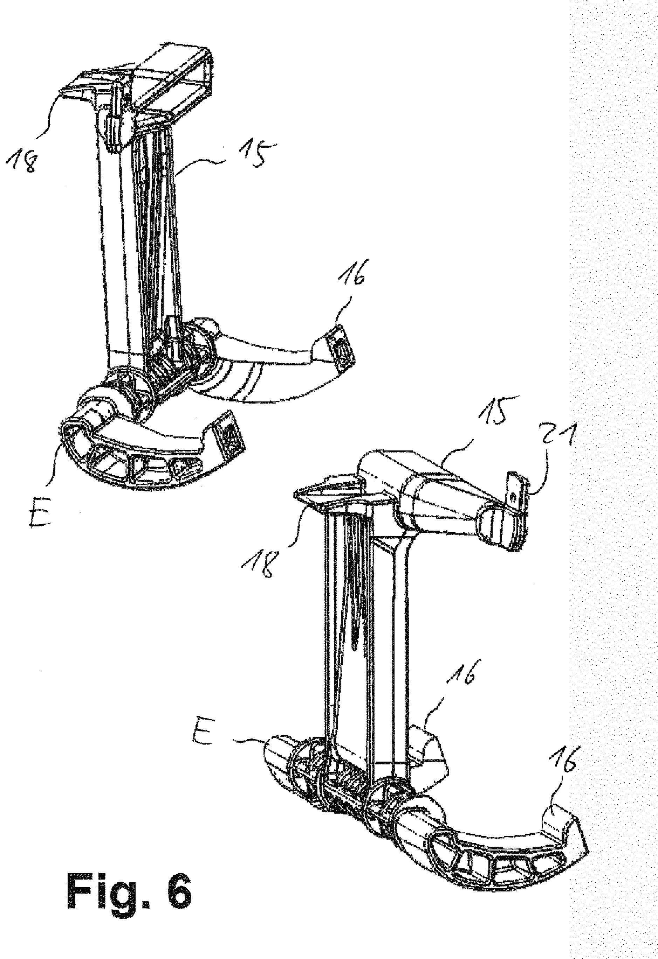

Eine Verriegelungseinrichtung 14 ist zur Verriegelung der Verstellvorrichtung 4 vorgesehen und in Figur 4 bis 6 detaillierter gezeigt. Die Verriegelungseinrichtung 14 weist ein an der Führungseinrichtung 8 angebrachtes schwenkbares Verriegelungselement 15 auf, das zum einen eine Verriegelung an dem Vier-Gelenk-System 9, z. B. einem der Lenker 10, 12, und weiterhin eine Verriegelung an dem Kopfkissenträger 3b ermöglicht. Das Verriegelungselement 15 ist hierbei schwenkbar an der Führungseinrichtung 8 vorgesehen, z. B. in einer Schwenkachse E. Die Handhabe 5 ist hier z. B. ein nach vorne schwenkbarer Hebel, der z. B. in einem Schwenk-Gelenk 5a an der Führungseinrichtung 8 gelagert ist und weiterhin mit einem inneren Hebelarm 5b direkt das Verriegelungselement 15 schwenkt. Das Verriegelungselement 15 weist in seinem unteren Bereich einen Längseingriff 16 auf, der z. B. ein hinterer Zahn ist, der in einen Gegeneingriff 10b eines der Lenker 10, 12 eingreift. Hierbei kann der Gegeneingriff 10b z. B. als Zahn-Vertiefung ausgebildet sein.

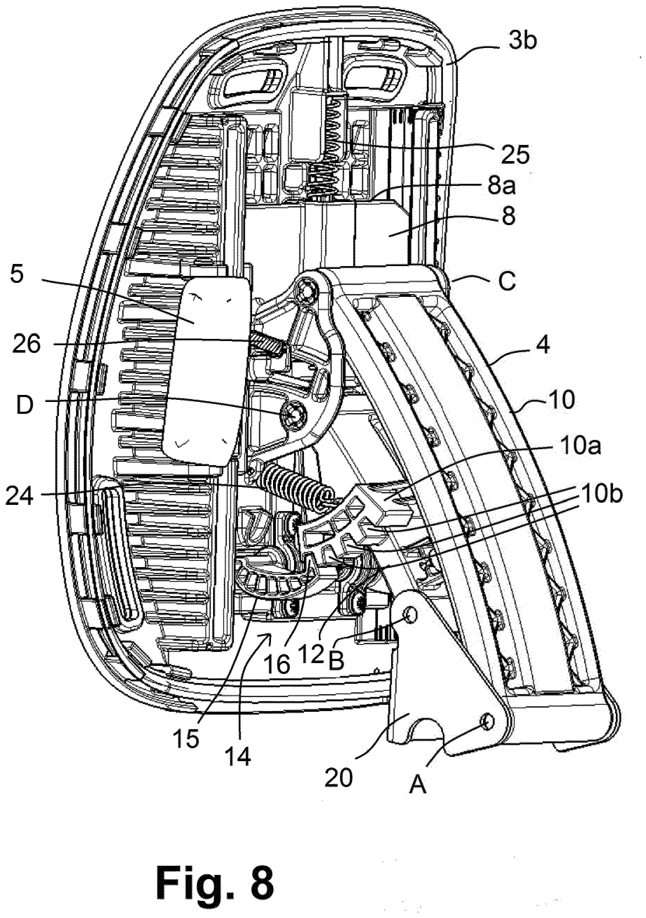

Bei der gezeigten Ausführungsform ist der Gegen-Eingriff für die Längsverstellung, d.h. die Zahnvertiefungen 10b, an dem hinteren Lenker 10 ausgebildet, wozu der hintere Lenker 10 hier mit einem sich in Y-Richtung erstreckenden Arretierungs-Vorsprung 10a ausgebildet ist, an dessen Unterseite die Zahnvertiefungen 10b, z. B. zwischen Zahnerhöhungen, ausgebildet sind. Aus z. B. Fig. 8 ist ersichtlich, dass mehrere Zahnvertiefungen 10b als Gegeneingriffe an dem Arretierungsvorsprung ausgebildet sein können, so dass der Längseingriff 16 wahlweise in einen der Zahnvertiefungen 10b eingreifen kann. Durch Betätigen der Handhabe 5 wird das Verriegelungselement 15 mit seinem unteren Bereich nach unten und vorne geschwenkt, so dass der Längseingriff 16, der als Verriegelungszahn ausgebildet ist, aus der jeweiligen Zahnvertiefung 10b heraus geschwenkt wird , so dass der Eingriff für die Längsverstellung aus dem Gegeneingriff gelangt und die Längsverstellung nachfolgend freigeben ist: beide Lenker 10 und 12 sind frei verstellbar.

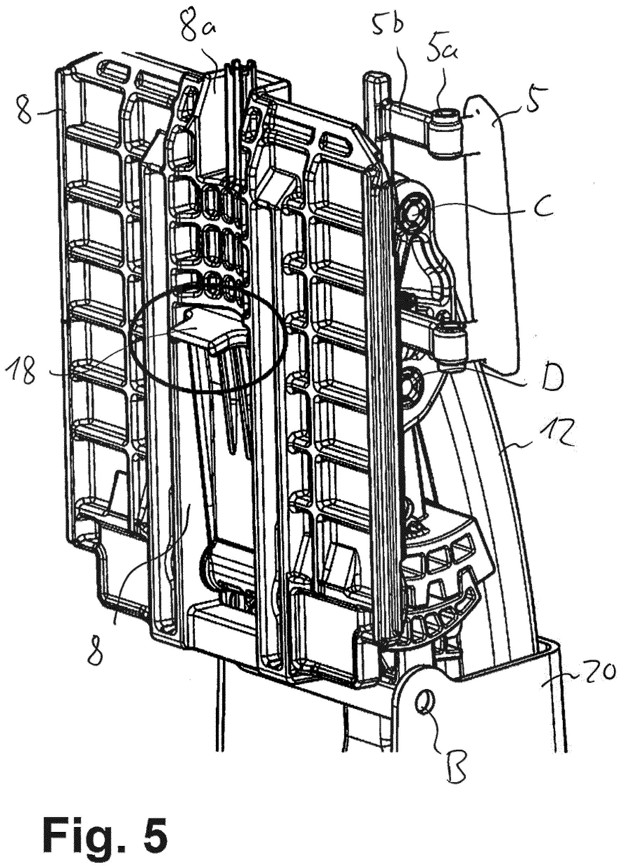

Weiterhin ist an dem Verriegelungselement 15 auch die Höhen-Verriegelung ausgebildet, wozu sie an einem oberen Bereich einen Höhen-Eingriff 18 aufweist, der gemäß Figur 5 nach vorne durch einen Freiraum der Führungseinrichtung 8 hindurch ragt. Bei Schwenken des Verriegelungselementes 15 wird der obere Bereich mit dem einen Höhen-Eingriff 18 nach hinten und gelangt nach hinten aus seiner Aufnehmung 23 in dem Kopfstützenträger 3b heraus, wodurch der bis dahin verriegeltem Kopfstützenträger 3b freigegeben wird.

Somit ist der Kopfstützenträger 3b in seiner vertikalen Führungsschiene 8a (Führungsschiene bzw. vertikale Höhenführung für die Kopfstütze 3) nachfolgend frei verstellbar bis zu dem jeweiligen oberen und unteren Anschlag.

Die Handhabe 5 kann insbesondere ergriffen und zur Entriegelung nach vorne gezogen werden; sie ist z. B. in einem Schwenkgelenk 5a an der Führungseinrichtung 8 gelagert, so dass ein innerer Hebelarm 5b entsprechend nach hinten geschwenkt und führt somit das von ihm aufgenommene Verriegelungselement 15 nach hinten schwenkt.

Die Verstellvorrichtung 4 ist vorteilhafterweise durch Federeinrichtungen geeignet vorgespannt. Hierbei können die Vorspannungen in X- und Z-Richtung sowie die Vorspannung der Verriegelungseinrichtung 14 und ihrer Handhabe vorzugsweise getrennt ausgebildet sein.

Eine erste Feder 24 zur Vorspannung in X-Richtung kann z. B. zwischen der Führungseinrichtung 8 und einem Lenker, z. B. dem hinteren Lenker 10 vorgesehen sein. Hierbei kann die erste Feder 24 z. B. an dem Arretierungsvorsprung 10a des hinteren Lenkers 10 eingehängt sein. Vorzugsweise zieht die erste Feder 24 die Führungseinrichtung 8 nach hinten.

Eine zweite Feder 25 zur Vertikalvorspannung ist vorzugsweise zwischen dem Kopfstützenträger 3b und der Führungseinrichtung 8 vorgesehen und wirkt auf den Kopfstützenträger 3b z. B. nach unten, um den Sitzinsassen bei der Verstellung zu unterstützen.

Eine dritte Feder 26 spannt die Verstellvorrichtung 4 in ihre Verriegelungsstellung vor. Die dritte Feder 26 kann gemäß z. B. Fig. 4 zwischen der Handhabe 5 und der Führungseinrichtung 8 vorgesehen sein, oder auch z. B. zwischen dem Verriegelungselement 15 und der Führungseinrichtung 8.

Somit kann der Benutzer die Handhabe 5 an ihrem äußeren Bereich mit seiner linken Hand erfassen und nach vorne ziehen, wodurch das Verriegelungselement in seine Entriegelungsstellung verstellt wird, so dass der Benutzer nachfolgend die Kopfstütze mit seiner rechten Hand in X- und Z-Richtung positionieren kann, bis er die Handhabe 5 loslässt und die Verriegelungeinrichtung 4 wieder verriegelt.

### Bezugszeichenliste

- 1: Fahrzeugsitz
- 2: Rückenlehne
- 3: Kopfstütze
- 3a: Kissen, Kopfstützen-Kissen
- 3b: Kopfstützenträger
- 4: Verstellvorrichtung
- 5: Handhabe
- 5a: Schwenkgelenk der Handhabe
- 5b: innerer Hebelarm der Handhabe 5 zur Aufnahme des Führungselementes 15
- 6: Bezug der Verstellvorrichtung 4
- 8: Führungseinrichtung
- 8a: Führungsschiene, vertikale Führung
- 9: Vier-Gelenk-Mechanismus
- 10: hinterer Lenker
- 10a: Arretierungs-Vorsprung für die Längsverriegelung
- 10b: Gegeneingriff für Längsverstellung, z. B. Zahnvertiefung in dem Arretierungs-Vorsprung 10a
- 12: vorderer Lenker
- 14: Verriegelungseinrichtung
- 15: Verriegelungselement der Verriegelungseinrichtung 14
- 16: Längseingriff des Verriegelungselementes 15, z. B. aufstehender Zahn
- 18: Höheneingriff
- 20: Lehnenanbindung
- 21: Anbindung der Handhabe 5 an das Verriegelungselement 15
- 23: Ausnehmung oder Fenster in dem Kopfstützenträger 3b für den Höheneingriff 18
- 24: erste Feder für Längsvorspannung
- 25: zweite Feder für Vertikalvorspannung
- 26: dritte Feder für die Vorspannung der Verstellvorrichtung

- A: hinteres unteres Gelenk
- B: vorderes unteres Gelenk
- C: hinteres oberes Gelenk
- D: vorderes oberes Gelenk
- E: Schwenkachse des Verriegelungselementes 15

- X: Längsrichtung
- Y: Querrichtung
- Z: vertikale Richtung (Höhenrichtung)

## Patentansprüche

1. Verstellvorrichtung (4) für eine Kopfstütze (3) eines Fahrzeugsitzes (1), wobei die Verstellvorrichtung (4) aufweist:
eine Führungseinrichtung (8) zur Führung eines Kopfstützenträgers (3b) in einer vertikalen Richtung (Z),
eine Lehnenanbindung (20) zur Anbringung an einer Rückenlehne (2),
eine Längsverstellung (10, 12) zur Verstellung der Führungseinrichtung (8) in einer Längsrichtung (X),
eine Verriegelungseinrichtung (14) zur Verriegelung der Verstellvorrichtung (4) in sowohl in der Längsrichtung (X) als auch der vertikalen Richtung (Z), und
eine Handhabe (5) zur Entriegelung der Verriegelungseinrichtung (14) in eine Entriegelungsstellung, in der die Verriegelungseinrichtung (14) die Längsverstellung (10, 12) in Längsrichtung (X) und die Höhenverstellung in vertikaler Richtung (X) freigibt,
wobei durch die Verriegelungseinrichtung (14) ein aufgenommener Kopfstützenträger (3b) in einer vertikalen Höhenposition verriegelbar ist,
**dadurch gekennzeichnet, dass**
die Längsverstellung (10, 12) aufweist:
einen hinteren Lenker (10), der in einem hinteren unteren Gelenk (A) an der Lehnenanbindung (20) und in einem hinteren oberen Gelenk (C) an der Führungseinrichtung (8) schwenkbar angelenkt ist, und einen vorderen Lenker (12), der in einem vorderen unteren Gelenk (B) an der Lehnenanbindung (20) und in einem vorderen oberen Gelenk (D) an der Führungseinrichtung (8) schwenkbar angelenkt ist,
wobei durch Schwenken der Lenker (10, 12) eine Längsposition der Führungseinrichtung (8) einstellbar ist.

2. Verstellvorrichtung (4) nach Anspruch 1, **dadurch gekennzeichnet, dass** in der Entriegelungsstellung ein aufgenommener Kopfstützenträger (3b) in vertikaler Position (Z) und in Längsposition (X) verstellbar ist.

3. Verstellvorrichtung (4) nach Anspruch 1 oder 2, **dadurch gekennzeichnet, dass,** beim Schwenken der Lenker (10, 12) zum Einstellen der Längsposition der Führungseinrichtung (8) der die Führungseinrichtung (8) nach vorne und unten schwenkbar ist.

4. Verstellvorrichtung (4) nach einem der vorherigen Ansprüche,
**dadurch gekennzeichnet, dass**
die Verriegelungseinrichtung (14) ein Verriegelungselement (15) aufweist, das einen Längseingriff (16) zur Festlegung der Längsposition der Führungseinrichtung (8) in Längsrichtung (X) und einen Höheneingriff (18) zur Festlegung der Höhenposition des Kopfstützenträgers (3b) in vertikaler Richtung (Z) aufweist,
wobei bei der Verstellung der Verriegelungseinrichtung (14) in ihre Entriegelungsstellung der Längseingriff (16) und der Höheneingriff (18) außer Eingriff gebracht werden.

5. Verstellvorrichtung (4) nach Anspruch 4, **dadurch gekennzeichnet, dass**
der Längseingriff (16) an einem unteren Bereich des Verriegelungselementes (15) und der Höheneingriff (18) an einem oberen Bereich des Verriegelungselementes (15) ausgebildet ist, und
das Verriegelungselement (15) bei der Verstellung in seine Entriegelungsstellung mit seinem unteren Bereich nach unten, z. B. nach unten und hinten, und mit seinem oberen Bereich nach hinten geschwenkt wird.

6. Verstellvorrichtung (4) nach Anspruch 4 oder 5, **dadurch gekennzeichnet, dass** der Längseingriff (16) in einen Gegeneingriff (10b) eines der Lenker (10, 12) eingreift, vorzugsweise in einer vertikalen Richtung, z. B. von unten nach oben.

7. Verstellvorrichtung (4) nach einem der Ansprüche 4 bis 6, **dadurch gekennzeichnet, dass** der Höheneingriff (18) durch einen Freiraum der Führungseinrichtung (8) nach vorne ragt zum Eingriff in einen aufgenommenen Kopfstützenträger (3b).

8. Verstellvorrichtung (4) nach einem der vorherigen Ansprüche,
**dadurch gekennzeichnet, dass** die Handhabe (5) einen schwenkbaren Hebelarm (5b) aufweist, vorzugsweise mit Schwenk-Lager (5a) in der Führungseinrichtung (8).

9. Verstellvorrichtung (4) nach einem der vorherigen Ansprüche,
**dadurch gekennzeichnet, dass** die Handhabe (5) gegen eine Federkraft einer Federeinrichtung (26) in die Entriegelungsstellung schwenkbar ist, vorzugsweise zur Entriegelung nach vorne schwenkbar ist.

10. Verstellvorrichtung (4) nach einem der vorherigen Ansprüche,
**dadurch gekennzeichnet, dass** die Abstände der oberen Gelenke (C, D) zueinander fest ist, vorzugsweise durch feste Aufnahme in der Führungseinrichtung (8), und die Abstände der unteren Gelenke (A, B) zueinander fest ist, vorzugsweise durch feste Aufnahme in der Lehnenanbindung (20).

11. Verstellvorrichtung (4) nach Anspruch 10, **dadurch gekennzeichnet, dass** die Lenker (10, 12), die Führungseinrichtung (8) und die Lehnenanbindung (20) einen Vier-Gelenk-Mechanismus (9), vorzugsweise mit nur einem Freiheitsgrad, ausbilden zur Längsverstellung der Führungseinrichtung (8) gegenüber der Lehnenanbindung (20) durch Verstellung in den Gelenken (A, B, C, D).

12. Verstellvorrichtung (4) nach einem der vorherigen Ansprüche,
**dadurch gekennzeichnet, dass**
der hintere Lenker (10) länger als der vordere Lenker (12) ist, wobei das hintere untere Gelenk (A) unterhalb des vorderen unteren Gelenks (B) angeordnet ist und/oder
das hintere obere Gelenk (C) oberhalb des vorderen oberen Gelenks (D) angeordnet ist.

13. Fahrzeugsitz (1), der aufweist:
eine Rückenlehne (2),
eine Kopfstütze (3), und
eine Verstellvorrichtung (4) nach einem der vorherigen Ansprüche,
wobei die Lehnenanbindung (20) der Verstellvorrichtung (4) an der Rückenlehne (2) angebracht ist und die Führungseinrichtung (8) einen Kopfstützenträger (3b) der Kopfstütze (3) höhenverstellbar aufnimmt,
wobei bei Entriegelung der Verriegelungseinrichtung (14) die Kopfstütze (3) durch die Verstellvorrichtung (4) in Längsrichtung (X) und
vertikaler Richtung (Z) gegenüber der Rückenlehne (2) verstellbar ist.

14. Fahrzeugsitz (1) nach Anspruch 13, **dadurch gekennzeichnet, dass die** Kopfstütze (3) jeweils in mehrere diskrete Stellungen in Längsrichtung (X) und vertikaler Richtung (Z) einstellbar ist.

15. Fahrzeugsitz (1) nach Anspruch 13 oder 14, **dadurch gekennzeichnet, dass** durch Betätigen der Handhabe (5) und Entriegelung der Verriegelungseinrichtung (14) die Kopfstütze (3) vom Benutzer ergreifbar und sowohl in vertikaler Richtung (Z) als auch Längsrichtung (X), vorzugsweise gleichzeitig, verstellbar ist zur Einstellung sowohl der Längsposition als auch der Höhenposition,
unter Fixierung beider Positionen bei Loslassen der Handhabe (5).

16. Fahrzeugsitz (1) nach einem der Ansprüche 13 bis 15, **dadurch gekennzeichnet, dass** die Verstellvorrichtung (4) unter einem Bezug oder einer Abdeckung (6) aufgenommen ist, wobei der Bezug oder die Abdeckung (6) am Kopfkissen (3) angebunden ist oder das Kopfkissen (3) mit umgibt.

## Claims

1. Adjusting apparatus (4) for a headrest of a vehicle seat, the adjusting apparatus (4) comprising:
a guide device (8) for guiding a headrest support (3b) in a vertical direction (Z),
a backrest connection (20) for attachment to a backrest (2),
a longitudinal adjustment arrangement (10, 12) for adjusting the guide device (8) in a longitudinal direction (X),
a locking device (14) for locking the adjusting apparatus (4) in both in the longitudinal direction (X) and the vertical direction (Z), and
a handle (5) for unlocking the locking device (14) to an unlocking position in which the locking device (14) releases the longitudinal adjustment arrangement (10, 12) in the longitudinal direction (X) and the vertical adjustment arrangement in the vertical direction (Z),
wherein a held headrest support (3b) is configured to be locked in a vertical position by the locking device (14),
**characterised in that**
the longitudinal adjustment arrangement (10, 12) includes:
a rear link (10) which is pivotably connected in an articulated manner to the backrest connection (20) in a rear lower joint (A) and to the guide device (8) in a rear upper joint (C), and
a front link (12) which is pivotably connected in an articulated manner to the backrest connection (20) in a front lower joint (B) and to the guide device (8) in a front upper link (D),
wherein a longitudinal position of the guide device (8) is configured to be adjusted by pivoting of the links (10, 12).

2. Adjusting apparatus (4) according to claim 1, **characterised in that** a held headrest support (3b) is configured to be adjusted in the vertical position (Z) and in the longitudinal position (X) in the unlocking position.

3. Adjusting apparatus according to claim 1 or 2, **characterised in that,** upon pivoting the links (10, 12) for adjusting the longitudinal position of the guide device (8), the guide device (8) can be pivoted forwards and downwards.

4. Adjusting apparatus according to one of the above claims, **characterised in that**
the locking device (14) includes a locking element (15) which comprises a longitudinal engagement means (16) for defining the longitudinal position of the guide device (8) in the longitudinal direction (X) and a vertical engagement means (18) for defining the height position of the headrest support (3b) in the vertical direction (Z),
wherein the longitudinal engagement means (14) and the vertical engagement means (16) are disengaged when the locking device (14) is adjusted to its unlocking position.

5. Adjusting apparatus (4) according to claim 4, **characterised in that** the longitudinal engagement means (16) is formed on a lower region of the locking element (15), and the vertical engagement means (18) is formed on an upper region of the locking element (15), and
the locking element (15), when it is adjusted to its unlocking position, is pivoted downward, e.g. downward and backward, by way of its lower region and rearward by way of its upper region.

6. Adjusting apparatus (4) according to claim 4 or 5, **characterised in that** the longitudinal engagement means (16) engages into a mating engagement means (10b) of one of the links (10, 12), preferably in a vertical direction, e.g. upwards from below.

7. Adjusting apparatus (4) according to one of the claims 4 through 6, **characterised in that** the vertical engagement means (18) protrudes forward through a clearance in the guide device (8) for the purpose of engaging into a held headrest carrier (3b).

8. Adjusting apparatus (4) according to one of the above claims, **characterised in that** the handle (5) has a pivotable lever arm (5b), preferably with a pivot bearing (5a) in the guide device (8).

9. Adjusting apparatus (4) according to one of the above claims, **characterised in that** the handle (5) is configured to be pivoted into the unlocking position against a spring force of a spring device (26), preferably to be pivoted forward for unlocking.

10. Adjusting apparatus (4) according to one of the above claims, **characterised in that** the distances between the upper joints (C, D) are fixed, preferably by fixed mounting inside the guide device (8), and the distances between the lower joints (A, B) are fixed, preferably by fixed mounting inside the backrest connection (20).

11. Adjusting apparatus (4) according to claim 10, **characterised in that** the links (10, 12), the guide device (8) and the backrest connection (20) form a four-joint mechanism (9), preferably with only one degree of freedom, for longitudinally adjusting the guide device (8) in relation to the backrest connection (20) by adjustment in the joints (A, B, C, D).

12. Adjusting apparatus (4) according to one of the above claims,
**characterised in that**
the rear link (10) is longer than the front link (12), wherein the rear lower joint (A) is arranged below the front lower joint (D),
and the rear upper joint (C) is arranged above the front upper joint (D).

13. Vehicle seat (1) comprising:
a backrest (2),
a headrest (3), and
an adjusting apparatus (4) according to one of the above claims,
wherein the backrest connection (20) of the adjusting apparatus (4) is attached to the backrest (2), and the guide device (8) holds a headrest support (3b) of the head rest (3) in a vertically adjustable manner, and
wherein during unlocking of the locking device (14) the headrest (3) is configured to be adjusted by the adjusting apparatus (4) in the longitudinal direction (X) and vertical direction (Z) in relation to the backrest.

14. Vehicle seat (1) according to claim 13, **characterised in that** the headrest (3) is configured to be adjusted to a plurality of discrete positions in the longitudinal direction (X) and vertical direction (Z).

15. Vehicle seat (1) according to claim 13 or 14, **characterised in that** the headrest (3) is configured to be adjusted, by actuating the handle (5), both in the vertical direction (Z) and longitudinal direction (X), preferably simultaneously, for the purpose of adjusting both the longitudinal position and the vertical position, and both positions are configured to be fixed when the handle (5) is released.

16. Vehicle seat (1) according to one of the claims 13 through 15, **characterised in that** the adjusting apparatus (4) is held beneath a cover or covering (6), and wherein the cover or the covering (6) is connected to the head cushion (3) or jointly surrounds the head cushion (3).

## Revendications

1. Dispositif de réglage (4) pour un appui-tête (3) d'un siège de véhicule (1), le dispositif de réglage (4) présentant :
un dispositif de guidage (8) pour guider un support d'appui-tête (3b) dans un sens vertical (Z),
un élément de raccord au dossier (20) pour la fixation sur un dossier (2),
un élément de réglage longitudinal (10, 12) pour le réglage du dispositif de guidage (8) dans un sens longitudinal (X),
un dispositif de verrouillage (14) pour verrouiller le dispositif de réglage (4) aussi bien dans le sens longitudinal (X) que dans le sens vertical (Z), et
une poignée (5) pour déverrouiller le dispositif de verrouillage (14) dans une position de déverrouillage, dans laquelle le dispositif de verrouillage (14) libère le réglage longitudinal (10, 12) dans le sens longitudinal (X) et le réglage vertical dans le sens vertical (Z),
un support d'appui-tête (3b) pouvant être verrouillé dans une position en hauteur verticale au moyen du dispositif de verrouillage (14).
**caractérisé en ce que**
le réglage longitudinal (10, 12) présente :
un guidon arrière (10) qui est articulé pivotant, au niveau d'une articulation arrière inférieure (A), sur l'élément de raccord au dossier (20) et, au niveau d'une articulation arrière supérieure (C), sur le dispositif de guidage (8), et un guidon avant (12) qui est articulé pivotant, au niveau d'une articulation avant inférieure (B), sur l'élément de raccord au dossier (20) et, au niveau d'une articulation avant supérieure (D), sur le dispositif de guidage (8), une position longitudinale du dispositif de guidage (8) pouvant être réglée par pivotement des guidons (10, 12).

2. Dispositif de réglage (4) suivant la revendication 1, **caractérisé en ce qu'**en position de déverrouillage, un support d'appui-tête reçu peut être réglé en position verticale (Z) et en position longitudinale (X).

3. Dispositif de réglage (4) suivant la revendication 1 ou 2, **caractérisé en ce que** le dispositif de guidage (8) peut être pivoté vers l'avant et vers le bas lors du pivotement des guidons (10, 12) pour régler la position longitudinale du dispositif de guidage (8).

4. Dispositif de réglage (4) suivant une des revendications précédentes, **caractérisé en ce que** le dispositif de verrouillage (14) présente un élément de verrouillage (15) qui présente un élément d'engrènement longitudinal (16) pour fixer la position longitudinale du dispositif de guidage (8) dans le sens longitudinal (X) et un élément d'engrènement vertical (18) pour fixer la position verticale du support d'appui-tête (3b) dans le sens vertical (Z) où lors du réglage du dispositif de verrouillage (14) dans sa position de déverrouillage, l'élément d'engrènement longitudinal (16) et l'élément d'engrènement vertical (18) sont mis hors prise.

5. Dispositif de réglage (4) suivant la revendication 4, **caractérisé en ce que** l'élément d'engrènement longitudinal (16) est formé sur une partie inférieure de l'élément de verrouillage (15) et l'élément d'engrènement vertical (18) est formé sur une partie supérieure de l'élément de verrouillage (15) et,
lorsque l'élément de verrouillage (15) est déplacé dans sa position de déverrouillage, sa partie inférieure est pivotée vers le bas, par exemple vers le bas et vers l'arrière, et sa partie supérieure est pivotée vers l'arrière.

6. Dispositif de réglage (4) suivant la revendication 4 ou 5, **caractérisé en ce que** l'élément d'engrènement longitudinal (16) s'engrène dans un élément d'engrènement correspondant (10b) d'un des guidons (10, 12), de préférence dans un sens vertical, par exemple du bas vers le haut.

7. Dispositif de réglage (4) suivant une des revendications 4 à 6, **caractérisé en ce que** l'élément d'engrènement vertical (18) fait saillie vers l'avant, à travers un espace libre du dispositif de guidage (8) pour prendre dans un support d'appui-tête reçu (3b).

8. Dispositif de réglage (4) suivant une des revendications précédentes, **caractérisé en ce que** la poignée (5) présente un bras de levier pivotable (5b), de préférence avec un palier de pivotement (5a) dans le dispositif de guidage (8).

9. Dispositif de réglage (4) suivant une des revendications précédentes, **caractérisé en ce que** la poignée (5) peut être pivotée à l'encontre de la force d'un dispositif à ressort (26) en position de déverrouillage, de préférence vers l'avant pour le déverrouillage.

10. Dispositif de réglage (4) suivant une des revendications précédentes, **caractérisé en ce que** les distances des articulations supérieures (C, D) entre elles sont fixes, de préférence au moyen d'une réception fixe dans le dispositif de guidage (8) et les distances des articulations inférieures (A, B) entre elles sont fixes, de préférence au moyen d'une réception fixe dans l'élément de raccord au dossier (20).

11. Dispositif de réglage (4) suivant la revendication 10, **caractérisé en ce que** les guidons (10, 12), le dispositif de guidage (8) et l'élément de raccord au dossier (20) forment un mécanisme à quatre articulations (9), de préférence avec seulement un degré de liberté, pour le réglage longitudinal du dispositif de guidage (8) par rapport à l'élément de raccord au dossier (20) au moyen d'un réglage au niveau des articulations (A, B, C, D).

12. Dispositif de réglage (4) suivant une des revendications précédentes, **caractérisé en ce que** le guidon arrière (10) est plus long que le guidon avant (12), l'articulation inférieure arrière (A) étant disposée au-dessous de l'articulation inférieure avant (B) et/ou l'articulation supérieure arrière (C) est disposée au-dessus de l'articulation supérieure avant (D).

13. Siège de véhicule (1) présentant :
un dossier (2),
un appui-tête (3), et
un dispositif de réglage (4) suivant une des revendications précédentes,
l'élément de raccord au dossier (20) du dispositif de réglage (4) étant monté sur le dossier (2) et le dispositif de guidage (8) recevant un support d'appui-tête (3b) de l'appui-tête (3) de manière réglable en hauteur, l'appui-tête (3) pouvant être réglé par le dispositif de réglage (4) dans le sens longitudinal (X) et dans le sens vertical (Z) par rapport au dossier (2) lors du déverrouillage du dispositif de verrouillage (14).

14. Siège de véhicule (1) suivant la revendication 13, **caractérisé en ce que** l'appui-tête (3) peut être réglé respectivement à plusieurs positions discrètes dans le sens longitudinal (X) et dans le sens vertical (Z).

15. Siège de véhicule (1) suivant la revendication 13 ou 14 **caractérisé en ce que** l'appui-tête (3) peut être saisi par l'utilisateur par actionnement de la poignée (5) et déverrouillage du dispositif de verrouillage (14) et réglé aussi bien dans le sens vertical (Z) que dans le sens longitudinal (X), de préférence simultanément, pour un réglage aussi bien de la position longitudinale que de la position verticale en fixant les deux positions par relâchement de la poignée (5).

16. Siège de véhicule (1) suivant la revendication 13 ou 14 **caractérisé en ce que** le dispositif de réglage (4) est reçu sous un revêtement ou un recouvrement (6), le revêtement ou le recouvrement (6) étant relié au coussin (3) de l'appui-tête ou entourant également le coussin (3).
